# EUROPÄISCHE PATENTANMELDUNG

(11) **EP 2 993 766 A1**
(43) Veröffentlichungstag der Anmeldung: **09.03.2016**
(21) Anmeldenummer: 14183942.3
(22) Anmeldetag: 08.09.2014
(51) Int. Cl.: H02K 9/04, B02C 17/24, H02K 7/18, H02K 9/26

(54) **Verbesserte Kühlung eines Ringmotors**

(71) Anmelder: Siemens Aktiengesellschaft, 80333 München (DE)
(72) Erfinder: Hartmann, Ulrich, 14197 Berlin (DE); Rakowicz, Marian, 10247 Berlin (DE); Seibicke, Frank, 14822 Borkheide (DE); Tischler, Kurt, 91052 Erlangen (DE)

(57) **Zusammenfassung**

Die Erfindung betrifft einen Ringmotor, insbesondere für einen Mühlenantrieb, aufweisend einen hohlzylinderförmigen Stator (1), einen Rotor (2), welcher um eine Rotationsachse (3) drehbar gelagert ist und innerhalb des Stators (1) angeordnet ist, und ein Gehäuse (4), an welchem der Stator (1) befestigt ist. Weiterhin betrifft die Erfindung ein Serviceverfahren für einen derartigen Ringmotor. Ferner betrifft die Erfindung eine Verwendung eines derartigen Ringmotors. Um eine effiziente und wirtschaftliche Kühlung von Ringmotoren zu ermöglichen, wird vorgeschlagen, dass der Ringmotor mittels einer Durchzugsbelüftung kühlbar ist, wozu das Gehäuse (4) zumindest eine Einlassöffnung (5) zum Einlass von Kühlluft in den Ringmotor und zumindest eine Auslassöffnung (6) zum Auslass der Kühlluft aus dem Ringmotor aufweist. Ferner wird die Verwendung des Ringmotors zur Beheizung eines Gebäudes (20) vorgeschlagen, wobei die aus der zumindest einen Auslassöffnung (6) ausströmende Kühlluft zur Beheizung des Gebäudes (20) verwendet wird. Weiterhin wird ein Serviceverfahren für einen den Ringmotor mit zumindest einem Filter (17) vorgeschlagen, welcher jeweils für Staub undurchlässig ist, wobei der zumindest eine Filter (17) jeweils derart angeordnet ist, dass die durch die zumindest eine Einlassöffnung (5) in das Gehäuse (4) eindringende Kühlluft filterbar ist, wobei das Serviceverfahren die folgenden Verfahrensschritte umfasst:
- Bereithalten zumindest eines Filters zusätzlich zu dem zumindest einen Filter des Ringmotors,
wobei der zumindest eine, zusätzlich bereitgehaltene Filter im Wesentlichen baugleich mit dem zumindest einen Filter des Ringmotors ist,
falls der zumindest eine Filter des Ringmotors ausgetauscht werden muss:
- Ausbauen des zumindest einen, auszutauschenden Filters des Ringmotors und
- Einbauen des zumindest einen, zusätzlich bereitgehaltenen Filters.

## Beschreibung

Die Erfindung betrifft einen Ringmotor, insbesondere für einen Mühlenantrieb, aufweisend einen hohlzylinderförmigen Stator, einen Rotor, welcher um eine Rotationsachse drehbar gelagert ist und innerhalb des Stators angeordnet ist, und ein Gehäuse, an welchem der Stator befestigt ist. Weiterhin betrifft die Erfindung ein Serviceverfahren für einen derartigen Ringmotor. Ferner betrifft die Erfindung eine Verwendung eines derartigen Ringmotors.

Ein derartiger Ringmotor bzw. derartige Verfahren kommen beispielsweise bei Antriebsmotoren für Gesteinsmühlen zum Einsatz. Die beim Betrieb eines elektrischen Antriebsmotors entstehende Verlustwärme muss durch ein geeignetes Kühlmedium aus dem Motor abgeführt werden, um ein Überhitzen des Motors zu vermeiden.

Bislang wurden die Motoren mit Hilfe eines geschlossenen Luftkreislaufes gekühlt. Die Rückkühlung der Luft erfolgte dabei mit Hilfe von wasserdurchflossenen Wärmetauschern. Eine Rückkühlung des Kühlwassers mit Hilfe von Kühlaggregaten oder die Entnahme von kaltem Wasser, z.B. aus einem Fluss, ist dabei erforderlich.

Aus der DE 10 2011 088 660 A1 ist ein Ringmotor mit einem segmentierten Gehäuse und einem segmentierten Stator bekannt.

Der Erfindung liegt die Aufgabe zugrunde, eine effiziente und wirtschaftliche Kühlung von Ringmotoren zu ermöglichen.

Diese Aufgabe wird durch einen Ringmotor der eingangs genannten Art dadurch gelöst, dass der Ringmotor mittels einer Durchzugsbelüftung kühlbar ist, wozu das Gehäuse zumindest eine Einlassöffnung zum Einlass von Kühlluft in den Ringmotor und zumindest eine Auslassöffnung zum Auslass der Kühlluft aus dem Ringmotor aufweist.

Ferner wird diese Aufgabe durch die Verwendung eines derartigen Ringmotors zur Beheizung eines Gebäudes gelöst, wobei die aus der zumindest einen Auslassöffnung ausströmende Kühlluft zur Beheizung des Gebäudes verwendet wird.

Das Gehäuse des Ringmotors ist dabei vorzugsweise derart ausgelegt, dass die während des Betriebs des Ringmotors auftretenden Kräfte und Drehmomente zuverlässig an ein Fundament, auf welchem der Ringmotor angeordnet ist, abgeleitet werden können. Ein derartiges Gehäuse wirkt somit als eine Tragekonstruktion für den Ringmotor.

Zur Realisierung der Durchzugsbelüftung ist das Gehäuse insbesondere derart ausgestaltet, dass die Kühlluft zumindest dem Stator zu- und wieder abführbar ist. Beispielsweise sind hierfür Hohlräume innerhalb des Gehäuses vorgesehen, welche als Kanäle für die Kühlluft fungieren.

Im Unterschied zu dem bisher verwendeten, geschlossenen Kühlkreislauf im Motorinneren, wird ein offener Kühlkreislauf vorgeschlagen, wozu Außenluft durch den Ringmotor geleitet wird. Dadurch wird erreicht, dass sich die Kühlluft im Motorinneren erwärmt, indem sie dem Motorinneren die während des Betriebs des Ringmotors entstehende Verlustwärme entnimmt. Die Warmluft wird dann an ein oder mehreren Auslassöffnungen aus dem Ringmotor bzw. aus dem Gehäuse heraus geleitet.

Durch den Wegfall des bisher üblicherweise verwendeten Kühlwassers zur Luftrückkühlung sinkt das Risiko, dass durch Undichtigkeiten im Wasserkreislauf ein Schaden am Ringmotor entstehen kann. Darüber hinaus entfällt die unter Umständen sehr energieintensive Rückkühlung des Kühlwassers mit Kühlaggregaten oder Klimageräten bzw. die Rückkühlung über Kühltürme. Insbesondere bei Anwendungen für Mühlen oder Gesteinsmühlen, bei denen oftmals wenig Wasser zur Verfügung steht, wäre die Lösung mit Kühltürmen aufgrund des hohen Wasserverbrauchs nachteilig. Im Gegensatz dazu kann der vorgeschlagene Ringmotor auf eine derart aufwändige Rückkühlung verzichten.

Die Durchzugsbelüftung des vorgeschlagenen Ringmotors ist besonders bei einem Einsatz des Ringmotors im Minenumfeld, beispielsweise als Antriebsmotor für eine Mühle, von großem Vorteil und ermöglicht große finanzielle Einsparungen. Denn üblicherweise haben derartige Ringmotoren eine elektrische Leistung im Megawattbereich, wobei bei einer Kühlung mithilfe von Kühlwasser, einem Wärmetauscher und insbesondere einer Klimaanlage in etwa 30 % der erforderlichen Kühlleistung als elektrische Leistung zum Betrieb der Klimaanlage benötigt wird. Beispielsweise werden zur Rückkühlung der im Kühlwasser enthaltenen Wärmemenge von 1 kWh etwa 300 Wh an elektrischer Energie für die Klimaanlage verbraucht. Somit erlaubt der vorgeschlagene Ringmotor Einsparungen an elektrischer Energie, welche ansonsten für die Kühlung benötigt würde, in einer Größenordnung von einigen 10 kW bis einigen 100 kW.

Von Vorteil ist bei dem vorgeschlagenen Ringmotor weiterhin, dass die Kühlung des Ringmotors besonders leistungsstark und wirkungsvoll ausgestaltet ist. Denn für den Fall, dass die Verlustwärme mittels Kühlwasser und passiver Wärmetauscher an die Umgebung abgeführt würde, stellte sich im Motorinneren ein gegenüber der Außenluft erhöhtes Temperaturniveau ein, weil über die Wärmetauscher Wärme immer nur von einem höheren zu einem tieferen Temperaturniveau übertragen werden kann. Typischerweise wäre somit das Temperaturniveau der Kühlluft im Motorinneren um ca. 15 bis 20 K über der Außenlufttemperatur. Durch die Durchzugsbelüftung beim vorgeschlagenen Ringmotor entfällt dieser Temperaturunterschied, so dass im Vergleich zu Maschinen mit Kühlwasser und passiven Wärmetauschern bei sonst vergleichbarer Auslegung niedrigere Temperaturen im Motorinneren erreicht werden können. Das geringere Temperaturniveau innerhalb des vorgeschlagenen Ringmotors kann entweder zur Wirkungsgradsteigerung oder zu einer höheren Maschinenausnutzung verwendet werden.

Ein weiterer Vorteil besteht darin, dass die erwärmte Kühlluft zum Beheizen eines Gebäudes verwendet werden kann. Hierzu wird die aus der zumindest einen Auslassöffnung ausströmende Kühlluft, welche während des Betriebes des Ringmotors erwärmt wird, zur Beheizung des Gebäudes verwendet. Als Gebäude kommen beispielsweise Wohngebäude oder gewerblich genutzte Gebäude in Betracht, wobei auch provisorische Gebäude, wie zum Beispiel Containergebäude oder Mobilheime umfasst sind. Auch andere Verwendungen, wie zum Beispiel das Verwenden der in der Kühlluft enthaltenen Abwärme als Prozesswärme etc. sind dabei realisierbar.

Bei einer vorteilhaften Ausgestaltung der Erfindung weist das Gehäuse in Umfangsrichtung zumindest zwei, vorzugsweise vier, Gehäusesegmente auf.

Die Gehäusesegmente sind somit im Wesentlichen kreisbogenförmig ausgestaltet und schließen sich in Umfangsrichtung an einander an, um schließlich den hohlzylinderförmigen Stator einzufassen. Insbesondere kann auch der Stator segmentiert ausgeführt werden, wobei die entsprechenden Statorsegmente ebenfalls im Wesentlichen kreisbogenförmig ausgestaltet sind.

Durch die Segmentierung des Gehäuses und gegebenenfalls des Stators wird der Bau von besonders großen und leistungsstarken Ringmotoren ermöglicht, da die entsprechenden Segmente derart groß und schwer konstruiert werden können, dass sie gerade noch mit gängigen Transportvorrichtungen vom Ort der Herstellung der Segmente zum Ort des Betriebs des Ringmotors transportiert werden können. Dagegen könnte ein vergleichbar großer Ringmotor ohne Segmentierung nicht mehr transportiert werden.

Vorzugsweise ist dabei vorgesehen, dass jedes der Gehäusesegmente jeweils zumindest eine Einlassöffnung und zumindest eine Auslassöffnung aufweist, so dass für jedes Gehäusesegment eine Durchzugsbelüftung realisierbar ist. Alternativ kann auch eine Durchzugsbelüftung über zwei oder mehr Gehäusesegmente realisiert werden, wobei zumindest eine Einlassöffnung in einem der Gehäusesegmente und zumindest eine Auslassöffnung in einem anderen der Gehäusesegmente vorgesehen ist.

Bei einer weiteren vorteilhaften Ausgestaltung der Erfindung weist das Gehäuse in axialer Richtung zwei stirnseitige Axialabteilungen auf, welche jeweils derart ausgestaltet sind, dass die Kühlluft von der jeweiligen Einlassöffnung zum Stator und/oder die Kühlluft vom Stator zur jeweiligen Auslassöffnung geleitet werden kann.

Vorzugsweise sind die beiden stirnseitigen Axialabteilungen voneinander strömungstechnisch zumindest derart voneinander abgetrennt, dass zumindest kein wesentlicher Anteil einer Kühlluftströmung in einer der Axialabteilungen direkt in die andere Axialabteilung strömen kann. Somit kann sichergestellt werden, dass die Kühlluft hauptsächlich der Kühlung des Stators dient, wodurch eine große Kühlleistung für die Kühlung des Ringmotors gewährleistet werden kann.

Unter anderem sind folgende Konstellationen für die Führung der Kühlluftströmung denkbar. Erstens kann die eine stirnseitige Axialabteilung zumindest eine Einlassöffnung und die andere stirnseitige Axialabteilung zumindest eine Auslassöffnung aufweisen, so dass eine einseitige Belüftung entlang der axialen Richtung realisiert werden kann. In der stirnseitigen Axialabteilung mit der zumindest einen Einlassöffnung wird die Kühlluft somit von der jeweiligen Einlassöffnung zum Stator geleitet, während in der anderen stirnseitigen Axialabteilung mit der zumindest einen Auslassöffnung die Kühlluft vom Stator zur jeweiligen Auslassöffnung geleitet wird. Zweitens kann in den beiden stirnseitigen Axialabteilungen jeweils zumindest eine Einlassöffnung vorgesehen sein, wobei in der jeweiligen stirnseitigen Axialabteilung die Kühlluft dem Stator zugeführt wird, bevor die Kühlluft das Gehäuse über die zumindest eine Auslassöffnung wieder verlässt. Drittens kann eine bezüglich dem zweiten Beispiel umgekehrte Strömungsrichtung vorgesehen sein, so dass die jeweilige Einlassöffnung in den beiden stirnseitigen Axialabteilungen als Auslassöffnung fungiert. Somit wird bei dem zweiten und beim dritten Beispiel eine zweiseitige Belüftung realisiert, welche insbesondere symmetrisch zur axialen Mitte des Ringmotors ausgeführt werden kann.

Bei einer weiteren vorteilhaften Ausgestaltung der Erfindung weist der Stator dabei ein Statorblechpaket und zwei in axialer Richtung aus dem Statorblechpaket herausragende Wickelköpfe auf, welche jeweils in der jeweiligen stirnseitigen Axialabteilung angeordnet sind.

Insbesondere sind die beiden stirnseitigen Axialabteilungen derart ausgestaltet, dass die Kühlluft am jeweiligen Wickelkopf derart vorbeigeführt wird, dass eine ausreichende Kühlung des jeweiligen Wickelkopfs gewährleistet wird.

Bei einer weiteren vorteilhaften Ausgestaltung der Erfindung ist das Gehäuse dabei derart ausgestaltet, dass die Kühlluft zwischen der zumindest einen Einlassöffnung und der zumindest einen Auslassöffnung in den Luftspalt zwischen dem Stator und dem Rotor geleitet werden kann.

Vorzugsweise erstreckt sich das Gehäuse bzw. die jeweilige, oben erläuterte stirnseitig Axialabteilung in radialer Richtung somit zumindest von der radialen Innenseite des Stators bis zur radialen Außenseite des Rotors, so dass ein unerwünschtes Entweichen eines Großteils der Kühlluft durch einen zwischen dem Gehäuse und dem Rotor verbleibenden Spalt vermieden werden kann. Das Gehäuse kann beispielsweise im Wesentlichen U-förmig ausgestaltet sein, wobei der Stator innerhalb des U angeordnet ist und der Rotor in den Zwischenraum zwischen den beiden Stegen des U zumindest abschnittsweise hineinragt.

Zur Vermeidung von Strömungsverlusten kann das Gehäuse Umlenkelemente aufweisen, mittels welchen eine Strömung der Kühlluft verlustarm von einer radialen Strömungsrichtung in eine axiale Strömungsrichtung in den Luftspalt hinein und umgekehrt umgelenkt werden kann.

Bei einer weiteren vorteilhaften Ausgestaltung der Erfindung ist dabei zumindest eine erste Strömungsmaschine zur Umwälzung der Kühlluft in zumindest einer der beiden stirnseitigen Axialabteilungen angeordnet.

Durch die jeweilige erste Strömungsmaschine kann eine zuverlässige Versorgung der während des Betriebs Abwärme erzeugenden Aktivteile des Ringmotors gewährleistet werden. Insbesondere wenn der Ringmotor bei besonders rauen Umgebungsbedingungen eingesetzt wird, wie zum Beispiel bei Gesteinsmühlen, bietet die Integration der jeweiligen ersten Strömungsmaschine in das Gehäuse den Vorteil, dass die jeweilige erste Strömungsmaschine vor grobem Schmutz und beispielsweise Gesteinsbrocken geschützt ist, welche die jeweilige erste Strömungsmaschine beschädigen könnten.

Beispielsweise können mehrere erste Strömungsmaschinen vorgesehen sein, welche in einer der beiden stirnseitigen Axialabteilungen oder in den beiden stirnseitigen Axialabteilungen untergebracht sind. Vorzugsweise ist die jeweilige erste Strömungsmaschine unabhängig von der üblicherweise vergleichsweise geringen Drehzahl des Rotors betreibbar. Für den Fall, dass das Gehäuse mehrere Gehäusesegmente aufweist, ist vorteilhafterweise je Gehäusesegment zumindest eine erste Strömungsmaschine vorgesehen.

Bei einer weiteren vorteilhaften Ausgestaltung der Erfindung ist dabei die zumindest eine Einlassöffnung jeweils an einer der beiden axialen Stirnflächen des Gehäuses angeordnet, wobei die zumindest eine erste Strömungsmaschine als Axial-Strömungsmaschine ausgestaltet ist, mittels welcher die Kühlluft von der zumindest einen Einlassöffnung zu einem der Wickelköpfe und zum Luftspalt zwischen dem Rotor und dem Stator förderbar ist.

Eine derartige Ausgestaltung des Ringmotors erlaubt eine vergleichsweise geradlinige und somit verlustarme Führung der Kühlluft, wodurch eine besonders hohe Kühlleistung erzielt werden kann. Besonders gute Ergebnisse lassen sich insbesondere dann erzielen, wenn die jeweilige Einlassöffnung in radialer Richtung in etwa auf Höhe des Luftspalts bzw. des jeweiligen Wickelkopfs angeordnet ist. Vorzugsweise ist die jeweilige Einlassöffnung in radialer Richtung in etwa auf Höhe der jeweiligen Einlassöffnung angeordnet.

Für das oben erläuterte, erste Beispiel einer einseitigen Belüftung kann weiterhin zumindest eine Axial-Strömungsmaschine oder eine Radial-Strömungsmaschine in jener stirnseitigen Axialabteilung angeordnet sein, in welcher sich die jeweilige Auslassöffnung befindet. Dabei kann die jeweilige Axial-Strömungsmaschine bzw. Radial-Strömungsmaschine radial weiter außen als der dortige Wickelkopf angeordnet sein und dazu dienen, die schon erwärmte Kühlluft vorzugsweise in radialer Richtung bzw. in axialer Richtung aus dem Gehäuse hinaus zu fördern. Bezüglich des zweiten und dritten, oben erläuterten Beispiels einer zweiseitigen Belüftung können in jeder stirnseitigen Axialabteilung eine Axial-Strömungsmaschine oder mehrere Axial-Strömungsmaschinen vorgesehen sein, mittels welcher bzw. welchen die Kühlluft von der jeweiligen Einlassöffnung zum jeweiligen Wickelkopf und zum Luftspalt förderbar ist.

Bei einer weiteren vorteilhaften Ausgestaltung der Erfindung ist dabei die zumindest eine erste Strömungsmaschine als Radial-Strömungsmaschine ausgestaltet, mittels welcher die Kühlluft von der zumindest einen Einlassöffnung zu einem der Wickelköpfe und zum Luftspalt zwischen dem Rotor und dem Stator bzw. von einem der Wickelköpfe und vom Luftspalt zwischen dem Rotor und dem Stator zu der zumindest einen Auslassöffnung förderbar ist.

Beispielsweise sind sowohl die jeweilige, als Radial-Strömungsmaschine ausgestaltete erste Strömungsmaschine als auch die jeweilige Einlassöffnung radial weiter außen als der jeweilige Wickelkopf angeordnet. Dadurch steht für die jeweilige erste Strömungsmaschine mehr Bauraum zur Verfügung, so dass größere Strömungsmaschinen zum Einsatz kommen können, wodurch sehr große Kühlleistungen erreicht werden können. Vorzugsweise ist die jeweilige Einlassöffnung an einer der axialen Stirnflächen des Gehäuses angeordnet.

Für das oben erläuterte, erste Beispiel einer einseitigen Belüftung kann weiterhin zumindest eine Axial-Strömungsmaschine oder eine Radial-Strömungsmaschine in jener stirnseitigen Axialabteilung angeordnet sein, in welcher sich die jeweilige Auslassöffnung befindet. Dabei kann die jeweilige Axial-Strömungsmaschine bzw. Radial-Strömungsmaschine radial weiter außen als der dortige Wickelkopf angeordnet sein und dazu dienen, die schon erwärmte Kühlluft vorzugsweise in radialer Richtung bzw. in axialer Richtung aus dem Gehäuse hinaus zu fördern. Bezüglich des zweiten und dritten, oben erläuterten Beispiels einer zweiseitigen Belüftung können in jeder stirnseitigen Axialabteilung eine Radial-Strömungsmaschine oder mehrere Radial-Strömungsmaschinen vorgesehen sein, mittels welcher bzw. welchen die Kühlluft von der jeweiligen Einlassöffnung zum jeweiligen Wickelkopf und zum Luftspalt förderbar ist.

Bei einer weiteren vorteilhaften Ausgestaltung der Erfindung weist das Gehäuse in axialer Richtung eine mittige Axialabteilung auf, wobei der Stator ein Statorblechpaket aufweist, wobei sich die mittige Axialabteilung in axialer Richtung im Wesentlichen entlang des Statorblechpakets erstreckt, wobei der Stator radial durch ihn hindurchführende Kühlkanäle aufweist.

Durch die im Statorblechpaket angeordneten Kühlkanäle ist eine derartige Ausgestaltung des Ringmotors besonders für eine zweiseitige Belüftung geeignet. Vorzugsweise wird die Kühlluft in den oben erläuterten stirnseitigen Axialabteilungen zum jeweiligen Wickelkopf und zum Luftspalt geführt, um anschließend in axialer Richtung in den Luftspalt einzudringen und im Wesentlichen über die Kühlkanäle in radialer Richtung aus dem Stator und schließlich aus dem Gehäuse geführt zu werden. Vorteilhafterweise ist die zumindest eine Auslassöffnung in der mittigen Axialabteilung angeordnet. Die mittige Axialabteilung kann beispielsweise auch in mehrere Unterabteilungen aufgeteilt werden, insbesondere um die Steifigkeit des Gehäuses zu erhöhen.

Prinzipiell ist auch eine umgekehrte Führung der Kühlluft oder auch eine einseitige Belüftung denkbar.

Bei einer weiteren vorteilhaften Ausgestaltung der Erfindung ist dabei zumindest eine zweite Strömungsmaschine zur Umwälzung der Kühlluft in der mittigen Axialabteilung angeordnet.

Vorzugsweise ist die jeweilige zweite Strömungsmaschine als Axial-Strömungsmaschine ausgestaltet, mittels welcher jeweils die Kühlluft in radialer Richtung aus dem Gehäuse förderbar ist. Diese Ausgestaltung der mittigen Axialabteilung erlaubt eine zuverlässige Kühlung insbesondere des Stators und des Statorblechpakets.

Insbesondere wenn der Ringmotor bei besonders rauen Umgebungsbedingungen eingesetzt wird, wie zum Beispiel bei Gesteinsmühlen, bietet die Integration der jeweiligen zweiten Strömungsmaschine in das Gehäuse den Vorteil, dass die jeweilige zweite Strömungsmaschine vor grobem Schmutz und beispielsweise Gesteinsbrocken geschützt ist, welche die jeweilige zweite Strömungsmaschine beschädigen könnten.

Vorzugsweise ist die jeweilige zweite Strömungsmaschine unabhängig von der üblicherweise vergleichsweise geringen Drehzahl des Rotors betreibbar. Für den Fall, dass das Gehäuse mehrere Gehäusesegmente aufweist, ist vorteilhafterweise je Gehäusesegment zumindest eine zweite Strömungsmaschine vorgesehen.

Bei einer weiteren vorteilhaften Ausgestaltung der Erfindung ist der Ringmotor mit einer elektrischen Leistung von zumindest 1 MW, insbesondere mehr als 3 MW, betreibbar, wobei der Ringmotor zusätzlich oder alternativ einen Statorinnendurchmesser von zumindest 1000 mm, insbesondere mehr als 3000 mm, aufweist.

Beispielsweise kann der Ringmotor als Antriebsmotor für einen Pumpenantrieb, einen Kompressorantrieb, einen Stahlwerksantrieb oder eine Mühle ausgestaltet sein.

Insbesondere wenn der Ringmotor für den Antrieb von Mühlen bzw. Gesteinsmühlen verwendet wird, kann der Ringmotor auch derart ausgelegt werden, dass er mit elektrischen Leistungen von mehr als 10 MW, insbesondere mehr 20 MW, betreibbar ist bzw. einen Statorinnendurchmesser von mehr als 5000 mm aufweist. Vorzugsweise ist der Rotor hierzu drehfest mit einer Trommel der Mühle verbunden.

Da es sich bei dem Ringmotor um eine elektrische Maschine handelt und elektrische Maschinen auch generatorisch betrieben werden können, kann Ringmotor prinzipiell auch als Generator ausgeführt werden, insbesondere als Windkraftgenerator.

Bei einer weiteren vorteilhaften Ausgestaltung der Erfindung weist der Ringmotor zumindest einen Filter auf, welcher jeweils für Staub undurchlässig ist, wobei der zumindest eine Filter jeweils derart angeordnet ist, dass die durch die zumindest eine Einlassöffnung in das Gehäuse eindringende Kühlluft filterbar ist.

Dank der Verwendung des zumindest einen Filters kann verhindert werden, dass sich insbesondere bei staubigen Betriebsbedingungen Staub und Schmutz im Gehäuse ansammelt und festsetzt und somit die Kühlwege des Ringmotors verstopft. Dies erlaubt, die Kühlleistung des Ringmotors dauerhaft aufrechtzuerhalten, wodurch die Verfügbarkeit des Ringmotors erhöht wird. Vorzugsweise ist der zumindest eine Filter außerhalb des Gehäuses angeordnet.

Insbesondere ist der zumindest eine Filter jeweils für zündfähigen und/oder abrasiven Staub undurchlässig. Die Undurchlässigkeit für zündfähigen Staub ermöglicht eine explosionsgeschützte Ausgestaltung des Ringmotors. Die Undurchlässigkeit für abrasiven Staub schützt besonders die elektrischen Wicklungen des Ringmotors vor Beschädigungen der jeweiligen Isolierung.

Vorteilhafterweise ist an der jeweiligen Auslassöffnung eine Art Ventil oder Klappe angeordnet, welche ein Ausströmen der Kühlluft während des Betriebs des Ringmotors erlaubt und ein unerwünschtes Eindringen von staubiger Umgebungsluft durch die jeweilige Auslassöffnung, beispielsweise wenn der Motor nicht betrieben wird, verhindert.

Prinzipiell kann zumindest eine dritte Strömungsmaschine alternativ oder zusätzlich zu den oben erläuterten Strömungsmaschinen außerhalb des Gehäuses des Ringmotors angeordnet sein. Bezüglich der Kühlluftströmung ist die jeweilige dritte Strömungsmaschine vorzugsweise stromaufwärts der zumindest einen Einlassöffnung und/oder stromabwärts der zumindest einen Auslassöffnung angeordnet. Insbesondere kann vorgesehen sein, die dritte Strömungsmaschine zwischen der zumindest einen Einlassöffnung und dem zumindest einen Filter bzw. stromaufwärts des zumindest einen Filters anzuordnen.

Bei einer weiteren vorteilhaften Ausgestaltung der Erfindung weist der Ringmotor dabei zumindest einen Sensor auf, mittels welchem detektierbar ist, ob der zumindest eine Filter ausgetauscht werden muss.

Dank des Sensors kann automatisch erkannt werden, ob bzw. wann der jeweilige Filter ausgetauscht werden muss. Dadurch wird ein Austausch des jeweiligen Filters erst vorgenommen, wenn dies erforderlich ist, wodurch Kosten eingespart werden können. Gleichzeitig wird die Verfügbarkeit des Ringmotors erhöht, da stets eine ausreichende Filterung der Kühlluft vor dem Eintritt in das Gehäuse gewährleistet werden kann.

Weiterhin wird die oben genannte Aufgabe durch ein Serviceverfahren für einen Ringmotor mit dem oben erläuterten Filter durch die folgenden Verfahrensschritte gelöst:
- Bereithalten zumindest eines Filters zusätzlich zu dem zumindest einen Filter des Ringmotors,
   wobei der zumindest eine, zusätzlich bereitgehaltene Filter im Wesentlichen baugleich mit dem zumindest einen Filter des Ringmotors ist,
   falls der zumindest eine Filter des Ringmotors ausgetauscht werden muss:
- Ausbauen des zumindest einen, auszutauschenden Filters des Ringmotors und
- Einbauen des zumindest einen, zusätzlich bereitgehaltenen Filters.

Durch das Serviceverfahren wird die Verfügbarkeit des Ringmotors weiter erhöht. Insbesondere kann das Serviceverfahren ausgelöst werden, wenn der oben erläuterte, zumindest eine Sensor detektiert, dass der jeweilige Filter ausgetauscht werden muss. Vorzugsweise ist hierzu vorgesehen, dass der Sensor eine Meldung an ein IT-System abgibt, welche daraufhin die Durchführung des Serviceverfahrens auslöst.

Im Folgenden wird die Erfindung anhand der in den Figuren dargestellten Ausführungsbeispiele näher beschrieben und erläutert. Es zeigen:
- FIG 1: eine schematische Ansicht eines ersten Ausführungsbeispiels des erfindungsgemäßen Ringmotors,
- FIG 2: einen Ausschnitt eines zweiten Ausführungsbeispiels,
- FIG 3-6: einen Querschnitt eines dritten bis sechsten Ausführungsbeispiels, und
- FIG 7-8: eine schematische Ansicht eines siebten und achten Ausführungsbeispiels des erfindungsgemäßen Ringmotors.

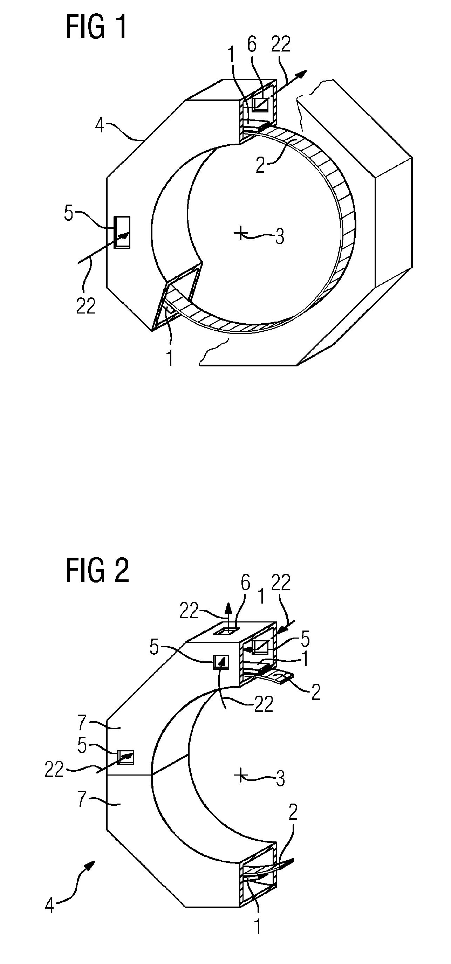

Figur 1 zeigt eine schematische Ansicht eines ersten Ausführungsbeispiels des erfindungsgemäßen Ringmotors. Der Ringmotor weist einen hohlzylinderförmigen Stator 1 auf, welcher an einem Gehäuse 4 befestigt ist. Innerhalb des Stators 1 ist ein drehbar um eine Rotationsachse 3 gelagerter Rotor 2 angeordnet. Der Ringmotor ist mittels einer Durchzugsbelüftung kühlbar, wozu das Gehäuse 4 eine Einlassöffnung 5 zum Einlass von Kühlluft in den Ringmotor und eine Auslassöffnung 6 zum Auslass der Kühlluft aus dem Ringmotor aufweist. Die jeweilige Kühlluftströmung ist dabei durch die Pfeile mit dem Bezugszeichen 22 dargestellt.

Beispielsweise kann der Ringmotor als Antriebsmotor für einen Mühlenantrieb ausgestaltet sein, wozu der Rotor drehfest mit einer Trommel der Mühle verbunden ist.

Figur 2 zeigt einen Ausschnitt eines zweiten Ausführungsbeispiels. Da der Ringmotor gemäß dem zweiten Ausführungsbeispiel einige Ähnlichkeiten zum Ringmotor des ersten Ausführungsbeispiels aufweist, werden im Folgenden lediglich einige Unterschiede erläutert. Gleiche Bezugszeichen bezeichnen dabei gleiche Gegenstände.

Im Unterschied zum ersten Ausführungsbeispiel weist das Gehäuse 4 des Ringmotors gemäß dem zweiten Ausführungsbeispiel mehrere Gehäusesegmente 7 auf. Das jeweilige Gehäusesegment 7 verfügt über mehrere Einlassöffnungen 5, durch welche die Kühlluft in das Gehäuse 4 einströmen kann, sowie über zumindest eine Auslassöffnung 6, durch welche die Kühlluft aus dem Gehäuse 4 heraus strömen kann. Aus Gründen der Übersichtlichkeit werden in der Figur 2 die Einlassöffnungen 5 und Auslassöffnungen 6 lediglich für eines der dargestellten Gehäusesegmente 7 dargestellt.

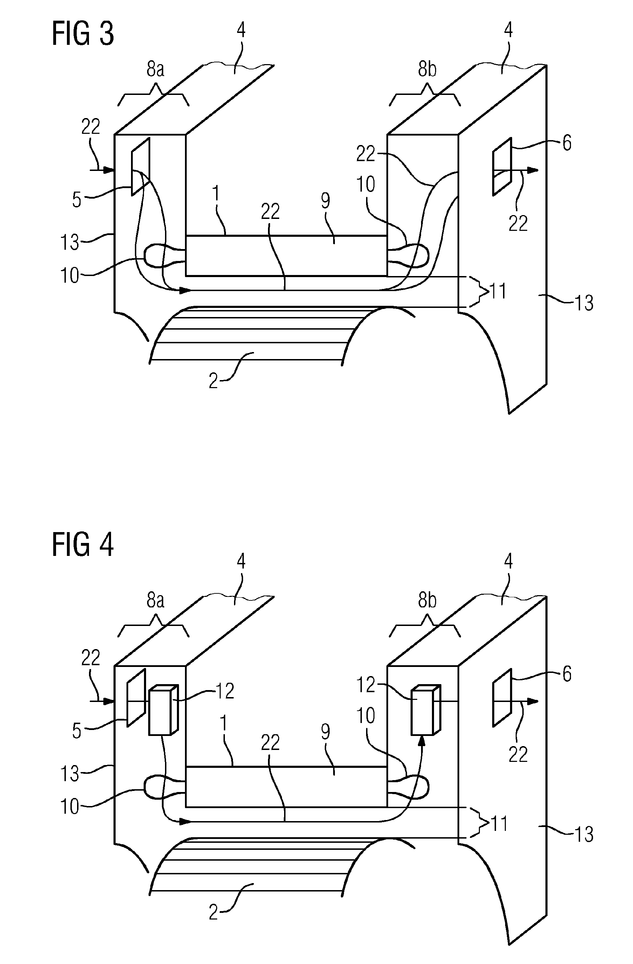

Figur 3 zeigt einen Querschnitt eines dritten Ausführungsbeispiels, wobei nur ein Ausschnitt dargestellt ist. Im Unterschied zum ersten Ausführungsbeispiel weist das Gehäuse 4 des Ringmotors gemäß dem dritten Ausführungsbeispiel zwei stirnseitige Axialabteilungen 8a, 8b auf. Dabei sind die stirnseitigen Axialabteilungen 8a, 8b und der Stator 1 mit seinem Statorblechpaket 9 derart ausgestaltet, dass ein jeweiliger, aus dem Statorblechpaket herausragender Wickelkopf 10 in einer der beiden stirnseitigen Axialabteilungen 8a, 8b angeordnet ist. Weiterhin sind das Gehäuse 4 und die beiden stirnseitigen Axialabteilungen 8a, 8b derart ausgestaltet, dass die Kühlluft von der Einlassöffnung 5 zum Stator 1 und weiter zur Auslassöffnung 6 geleitet werden kann, wobei die Einlassöffnung 5 und die Auslassöffnung 6 jeweils an einer axialen Stirnfläche 13 des Gehäuses 4 angeordnet sind. Insgesamt wird im dritten Ausführungsbeispiel eine einseitige Belüftung des Ringmotors realisiert.

Die Kühlluftströmung 22 wird in einen Luftspalt 11 zwischen dem Rotor 2 und dem Stator 1 geführt und streicht somit in axialer Richtung an der Innenseite des Stators 1 entlang, wobei auch der jeweilige Wickelkopf 10 von der Kühlluftströmung 22 umströmt wird.

Figur 4 zeigt einen Querschnitt eines vierten Ausführungsbeispiels. Der Ringmotor gemäß dem vierten Ausführungsbeispiel weist im Vergleich zum dritten Ausführungsbeispiel zusätzlich zwei erste Strömungsmaschinen 12 auf, wobei je stirnseitige Axialabteilung 8a, 8b eine erste Strömungsmaschine 12 vorgesehen ist. Vorzugsweise ist die jeweilige erste Strömungsmaschine 12 als Radial-Strömungsmaschine ausgeführt, wobei die Einlassöffnung 5 und die Auslassöffnung 6 radial weiter außen als der jeweilige Wickelkopf 10 angeordnet sind. Alternativ kann zumindest eine der beiden ersten Strömungsmaschinen 12 als Axial-Strömungsmaschine ausgestaltet sein, wobei die jeweilige Axial-Strömungsmaschine sowie die zugehörige Einlassöffnung 5 bzw. Auslassöffnung 6 in derselben stirnseitigen Axialabteilung 8a, 8b vorzugsweise in radialer Richtung in etwa auf Höhe des jeweiligen Wickelkopfs angeordnet sind. Prinzipiell kann dabei vorgesehen sein, auf eine der ersten Strömungsmaschinen 12 zu verzichten oder auch mehr als zwei erste Strömungsmaschinen 12 vorzusehen.

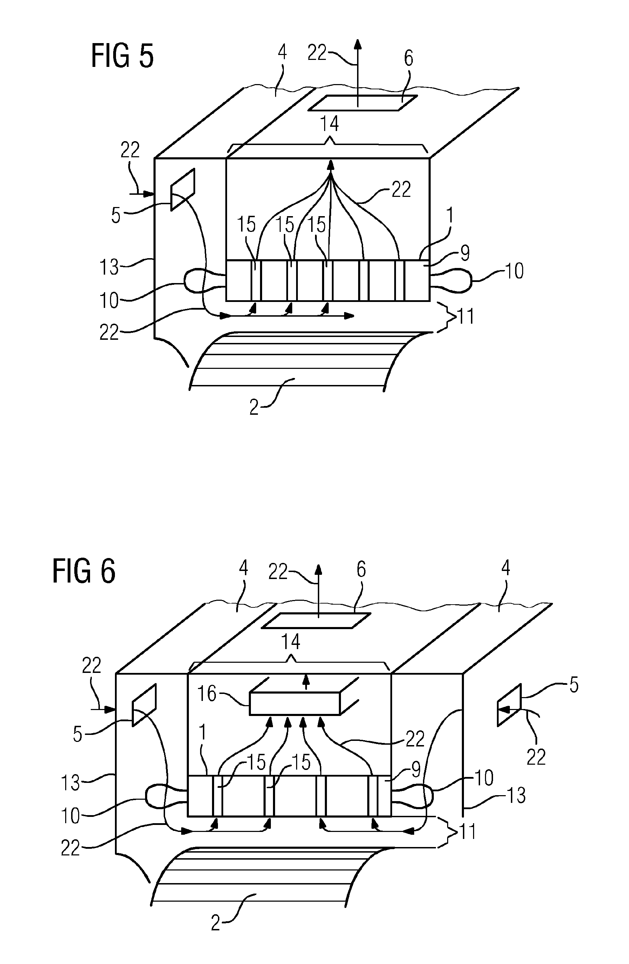

Figur 5 zeigt einen Querschnitt eines fünften Ausführungsbeispiels. Das Gehäuse 4 des Ringmotors weist eine mittige Axialabteilung 14 auf, welche sich in axialer Richtung im Wesentlichen entlang des Statorblechpakets 9 erstreckt. Zur verbesserten Kühlung des Stators 1 sind radial durch den Stator 1 hindurchführende Kühlkanäle 15 vorgesehen. Dadurch wird ermöglicht, dass eine Kühlluftströmung 22 vom Luftspalt 11 in den Stator 1 und das Statorblechpaket 9 eindringt und in radialer Richtung durchströmt, um schließlich das Gehäuse 4 über die Auslassöffnung 6, welche ebenfalls in der mittigen Axialabteilung 14 angeordnet ist, wieder zu verlassen.

Nicht näher dargestellt sind in der Figur 5 die Kühlluftströmung 22 und das Gehäuse 4 in der rechten Bildhälfte. Insbesondere können die Kühlkonzepte bzw. Lüftungskonzepte des dritten und vierten Ausführungsbeispiels mit dem Stator 1 und der mittigen Axialabteilung 14 aus dem fünften Ausführungsbeispiel kombiniert werden, um eine besonders große Kühlleistung zu erreichen. Somit kann beispielsweise eine weitere Auslassöffnung 6 bei einer axialen Stirnfläche 13 des Gehäuses 4 in der rechten Bildhälfte vorgesehen sein, um eine einseitige Belüftung zu realisieren, wobei eine erste Strömungsmaschine 12 bzw. mehrere erste Strömungsmaschinen 12 zum Einsatz kommen kann bzw. können.

Figur 6 zeigt einen Querschnitt eines sechsten Ausführungsbeispiels. Das Gehäuse 4 weist an seinen beiden axialen Stirnseiten 13 jeweils eine Einlassöffnung 5 auf, wodurch eine zweiseitige Belüftung des Ringmotors realisiert werden kann. Die Kühlluftströmung 22 dringt dabei durch die jeweilige Einlassöffnung 5 in das Gehäuse 4 ein, umströmt den jeweiligen Wickelkopf 10 und wird anschließend in den Luftspalt 11 geführt. Vom Luftspalt 11 dringt die Kühlluftströmung 22 in die Kühlkanäle 15 des Stators 1 ein, um anschließend von einer zweiten Strömungsmaschine 16, welche in der mittigen Axialabteilung 14 angeordnet ist, weiter nach radial außen durch die Auslassöffnung 6 aus dem Gehäuse 4 heraus gefördert zu werden. Vorzugsweise ist die zweite Strömungsmaschine 16 dabei als Axial-Strömungsmaschine ausgeführt.

Der Ringmotor gemäß dem sechsten Ausführungsbeispiels kann beispielsweise stirnseitige Axialabteilungen 8a, 8b aufweisen, welche der stirnseitigen Axialabteilung 8a aus dem dritten oder vierten Ausführungsbeispiel ähnlich ist. Insbesondere kann für jede der beiden stirnseitigen Axialabteilungen 8a, 8b eine erste Strömungsmaschine 12 vorgesehen sein, welche die durch die Einlassöffnung 5 in das Gehäuse 4 eindringende Kühlluft nach radial innen zum jeweiligen Wickelkopf 10 und zum Luftspalt 11 fördert.

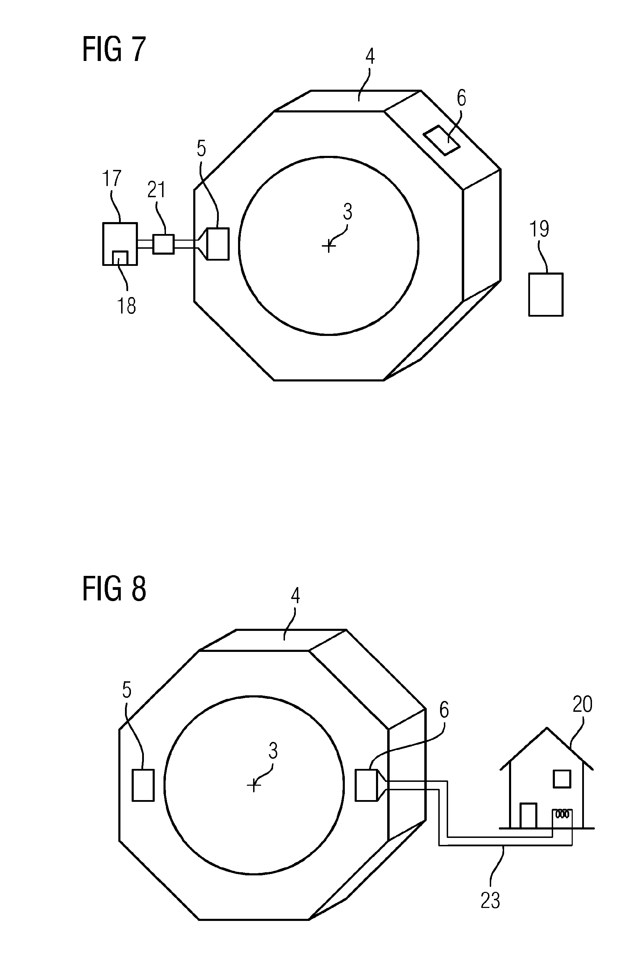

Figur 7 zeigt eine schematische Ansicht eines siebten Ausführungsbeispiels des erfindungsgemäßen Ringmotors. Das Gehäuse 4 des Ringmotors weist eine Einlassöffnung 5 und eine Auslassöffnung 6 auf. Der Ringmotor weist einen Filter 17 auf, welcher für Staub undurchlässig ist und welcher derart angeordnet ist, dass die durch die Einlassöffnung 5 in das Gehäuse 4 eindringende Kühlluft filterbar ist. Zusätzlich ist ein Sensor 18 vorgesehen, mittels welchem detektiert werden kann, ob der Filter 17 ausgetauscht werden muss. Zur Umwälzung der Kühlluft ist dabei eine dritte Strömungsmaschine 21 vorgesehen, welche zwischen dem Filter 17 und der Einlassöffnung 5 angeordnet ist.

Zur Durchführung eines Serviceverfahren ist weiterhin vorgesehen, einen Filter 19 zusätzlich zu dem Filter 17 des Ringmotors bereitzuhalten, wobei der zusätzlich bereitgehaltene Filter 19 im Wesentlichen baugleich mit dem Filter 17 des Ringmotors ist. Für den Fall, dass der Filter 17 des Ringmotors ausgetauscht werden muss, erlaubt dies bei Gewährleistung einer hohen Verfügbarkeit des Ringmotors, den auszutauschenden Filter 17 auszutauschen und den zusätzlich bereitgehaltenen Filters 19 einzubauen.

Figur 8 zeigt eine schematische Ansicht eines achten Ausführungsbeispiels des erfindungsgemäßen Ringmotors. Das Gehäuse 4 des Ringmotors weist eine Einlassöffnung 5 und eine Auslassöffnung 6 auf. Die aus der Auslassöffnung 6 ausströmende Kühlluft wird mittels einer geeigneten Leitung 23 einem Gebäude 20 zugeführt, so dass die Kühlluft zur Beheizung des Gebäudes 20 verwendet werden kann.

Zusammenfassend betrifft die Erfindung einen Ringmotor, insbesondere für einen Mühlenantrieb, aufweisend einen hohlzylinderförmigen Stator, einen Rotor, welcher um eine Rotationsachse drehbar gelagert ist und innerhalb des Stators angeordnet ist, und ein Gehäuse, an welchem der Stator befestigt ist. Weiterhin betrifft die Erfindung ein Serviceverfahren für einen derartigen Ringmotor. Ferner betrifft die Erfindung eine Verwendung eines derartigen Ringmotors. Um eine effiziente und wirtschaftliche Kühlung von Ringmotoren zu ermöglichen, wird vorgeschlagen, dass der Ringmotor mittels einer Durchzugsbelüftung kühlbar ist, wozu das Gehäuse zumindest eine Einlassöffnung zum Einlass von Kühlluft in den Ringmotor und zumindest eine Auslassöffnung zum Auslass der Kühlluft aus dem Ringmotor aufweist. Ferner wird die Verwendung eines derartigen Ringmotors zur Beheizung eines Gebäudes vorgeschlagen, wobei die aus der zumindest einen Auslassöffnung ausströmende Kühlluft zur Beheizung des Gebäudes verwendet wird. Weiterhin ein Serviceverfahren für einen derartigen Ringmotor mit zumindest einem Filter vorgeschlagen, welcher jeweils für Staub undurchlässig ist, wobei der zumindest eine Filter jeweils derart angeordnet ist, dass die durch die zumindest eine Einlassöffnung in das Gehäuse eindringende Kühlluft filterbar ist, wobei das Serviceverfahren die folgenden Verfahrensschritte umfasst:
- Bereithalten zumindest eines Filters zusätzlich zu dem zumindest einen Filter des Ringmotors,
   wobei der zumindest eine, zusätzlich bereitgehaltene Filter im Wesentlichen baugleich mit dem zumindest einen Filter des Ringmotors ist,
   falls der zumindest eine Filter des Ringmotors ausgetauscht werden muss:
   - Ausbauen des zumindest einen, auszutauschenden Filters des Ringmotors und
   - Einbauen des zumindest einen, zusätzlich bereitgehaltenen Filters.

## Patentansprüche

1. Ringmotor, insbesondere für einen Mühlenantrieb, aufweisend
- einen hohlzylinderförmigen Stator (1),
- einen Rotor (2), welcher um eine Rotationsachse (3) drehbar gelagert ist und innerhalb des Stators (1) angeordnet ist, und
- ein Gehäuse (4), an welchem der Stator (1) befestigt ist, **dadurch gekennzeichnet, dass**
der Ringmotor mittels einer Durchzugsbelüftung kühlbar ist, wozu das Gehäuse (4) zumindest eine Einlassöffnung (5) zum Einlass von Kühlluft in den Ringmotor und zumindest eine Auslassöffnung (6) zum Auslass der Kühlluft aus dem Ringmotor aufweist.

2. Ringmotor nach Anspruch 1,
wobei das Gehäuse (4) in Umfangsrichtung zumindest zwei, vorzugsweise vier, Gehäusesegmente (7) aufweist.

3. Ringmotor nach einem der vorhergehenden Ansprüche,
wobei das Gehäuse (4) in axialer Richtung zwei stirnseitige Axialabteilungen (8a, 8b) aufweist, welche jeweils derart ausgestaltet sind, dass die Kühlluft von der jeweiligen Einlassöffnung (5) zum Stator (1) und/oder die Kühlluft vom Stator (1) zur jeweiligen Auslassöffnung (6) geleitet werden kann.

4. Ringmotor nach Anspruch 3,
wobei der Stator (1) ein Statorblechpaket (9) und zwei in axialer Richtung aus dem Statorblechpaket (9) herausragende Wickelköpfe (10) aufweist, welche jeweils in der jeweiligen stirnseitigen Axialabteilung (8a, 8b) angeordnet sind.

5. Ringmotor nach Anspruch 3 oder 4,
wobei das Gehäuse (4) derart ausgestaltet ist, dass die Kühlluft zwischen der zumindest einen Einlassöffnung (5) und der zumindest einen Auslassöffnung (6) in den Luftspalt (11) zwischen dem Stator (1) und dem Rotor (2) geleitet werden kann.

6. Ringmotor nach einem der Ansprüche 3-5,
wobei zumindest eine erste Strömungsmaschine (12) zur Umwälzung der Kühlluft in zumindest einer der beiden stirnseitigen Axialabteilungen (8a, 8b) angeordnet ist.

7. Ringmotor nach Anspruch 6,
wobei die zumindest eine Einlassöffnung (5) jeweils an einer der beiden axialen Stirnflächen (13) des Gehäuses (4) angeordnet ist,
wobei die zumindest eine erste Strömungsmaschine (12) als Axial-Strömungsmaschine ausgestaltet ist, mittels welcher die Kühlluft von der zumindest einen Einlassöffnung (5) zu einem der Wickelköpfe (10) und zum Luftspalt (11) zwischen dem Rotor (2) und dem Stator (1) förderbar ist.

8. Ringmotor nach Anspruch 6 oder 7,
wobei die zumindest eine erste Strömungsmaschine (12) als Radial-Strömungsmaschine ausgestaltet ist, mittels welcher die Kühlluft von der zumindest einen Einlassöffnung (5) zu einem der Wickelköpfe (10) und zum Luftspalt (11) zwischen dem Rotor (2) und dem Stator (1) bzw. von einem der Wickelköpfe (10) und vom Luftspalt (11) zwischen dem Rotor (2) und dem Stator (1) zu der zumindest einen Auslassöffnung (6) förderbar ist.

9. Ringmotor nach einem der vorhergehenden Ansprüche,
wobei das Gehäuse (4) in axialer Richtung eine mittige Axialabteilung (14) aufweist,
wobei der Stator (1) ein Statorblechpaket (9) aufweist, wobei sich die mittige Axialabteilung (14) in axialer Richtung im Wesentlichen entlang des Statorblechpakets (9) erstreckt,
wobei der Stator (1) radial durch ihn hindurchführende Kühlkanäle (15) aufweist.

10. Ringmotor nach Anspruch 9,
wobei zumindest eine zweite Strömungsmaschine (16) zur Umwälzung der Kühlluft in der mittigen Axialabteilung (14) angeordnet ist.

11. Ringmotor nach einem der vorhergehenden Ansprüche,
wobei der Ringmotor mit einer elektrischen Leistung von zumindest 1 MW, insbesondere mehr als 3 MW, betreibbar ist und/oder
wobei der Ringmotor einen Statorinnendurchmesser von zumindest 1000 mm, insbesondere mehr als 3000 mm, aufweist.

12. Ringmotor nach einem der vorhergehenden Ansprüche,
wobei der Ringmotor zumindest einen Filter (17) aufweist, welcher jeweils für Staub undurchlässig ist,
wobei der zumindest eine Filter (17) jeweils derart angeordnet ist, dass die durch die zumindest eine Einlassöffnung (5) in das Gehäuse (4) eindringende Kühlluft filterbar ist.

13. Ringmotor nach Anspruch 12,
wobei der Ringmotor zumindest einen Sensor (18) aufweist, mittels welchem detektierbar ist, ob der zumindest eine Filter (17) ausgetauscht werden muss.

14. Serviceverfahren für einen Ringmotor nach Anspruch 12 oder 13, aufweisend die folgenden Verfahrensschritte:
- Bereithalten zumindest eines Filters (19) zusätzlich zu dem zumindest einen Filter (17) des Ringmotors,
wobei der zumindest eine, zusätzlich bereitgehaltene Filter (19) im Wesentlichen baugleich mit dem zumindest einen Filter (17) des Ringmotors ist,
falls der zumindest eine Filter (17) des Ringmotors ausgetauscht werden muss:
- Ausbauen des zumindest einen, auszutauschenden Filters (17) des Ringmotors und
- Einbauen des zumindest einen, zusätzlich bereitgehaltenen Filters (19).

15. Verwendung eines Ringmotors nach einem der Ansprüche 1-13 zur Beheizung eines Gebäudes (20),
wobei die aus der zumindest einen Auslassöffnung (6) ausströmende Kühlluft zur Beheizung des Gebäudes (20) verwendet wird.
